# EUROPEAN PATENT APPLICATION

(11) **EP 1 852 237 A1**
(43) Date of publication of application: **07.11.2007**
(21) Application number: 06474003.8
(22) Date of filing: 16.08.2006
(51) Int. Cl.: B29C 35/16, B29C 47/88

(54) **Device for cooling bands of caoutchouc compounds**

(30) Priority: 04.05.2006 SK 1082006 U
(71) Applicant: Konstrukta Industry, a.s, 912 50 Trencin (SK)
(72) Inventor: Kurpel, Lubomir, 911 08 Trencin (SK)

(57) **Abstract**

The device for cooling the bands of caoutchouc compound consist of a frame (7) on which two cooling drums (3,5) are fixed. Arrangements of the cooling drums are designed in such a way that their axes of rotation are inclined in the plane to each other. A conveyer belt (2) is twisted around the drums (3,5) in spiral. The belt is driven by a motor (9). The position of the conveyer belt (2) on the cooling drums determinate the guiding listels (4) (fixed on the frame (7)). The frame (7) together with the cooling drums (3,5), the conveyer belt (2) is closed by a cover (8). The elements (6) are fixed in the cover to regulate the flow of the cooling utility.
The cover (8) is equipped with input and output openings arranged in one line. That allows arranging the device for cooling into the production line.

## Description

The present invention relates to a device for cooling the bands of caoutchouc compounds.

The bands of caoutchouc compounds are semiproducts used for tyres production. The bands of caoutchouc compounds produced by regular device is sheet shaped, with constant thickness, temperature of about 80 - 100 °C. For further processing is necessary to cool down the band's temperature at 35 - 45 °C.
Therefore we use the cooling device based on air cooling. To decraese the temperature of the bands of caoutchouc compounds the length of conveyer belt must be 40 - 120 m (according to the band cross section).
The arrangements of the above cooling devices consist of conveyer system, which transports the band of caoutchouc compound. The cooling air is distributed on the band by the help of device for air distribution (located above the conveyer system) and fans. The length of the conveyer system must be specified according to band temperature and thickness. At the end of cooling device the band of caoutchouc compound must have reached the desired temperature. Usually the conveyer device is long. The cooling air is pre-cooled in order to ensure the desired temperature.

Thus, the costs for assembling the device and operating costs are high.

The object of the present invention is to create a device which cools the bands of caoutchouc compound in such a way to decrease the assembling and operating costs and achieve the required results.

The invention uses the idea of arranging the required length of conveyer belt on drum periphery (the band is twisted around the drum in spiral). Therefore the number of wraparounds of one drum (minimum) corresponding to the length of cooling distance.
At the input of the device the band of caoutchouc compound is bedded on conveyer belt which is driven for multiple wrapping around rotary embedded drum. It is possible to distribute the cooling utility - usually it is ambient air. That is how the cooling down is provided for at least one side of the band of caoutchouc compound.
It is useful to design the drum surface of air permeable material. In order the air to be distributed into the inner space of the drum and around the band of caoutchouc compound.

It is recommended to have in the design two or more cooling drums to ensure effective input and output of bands in one axis (if it is useful for grounding arrangement of the device).

### Drawing

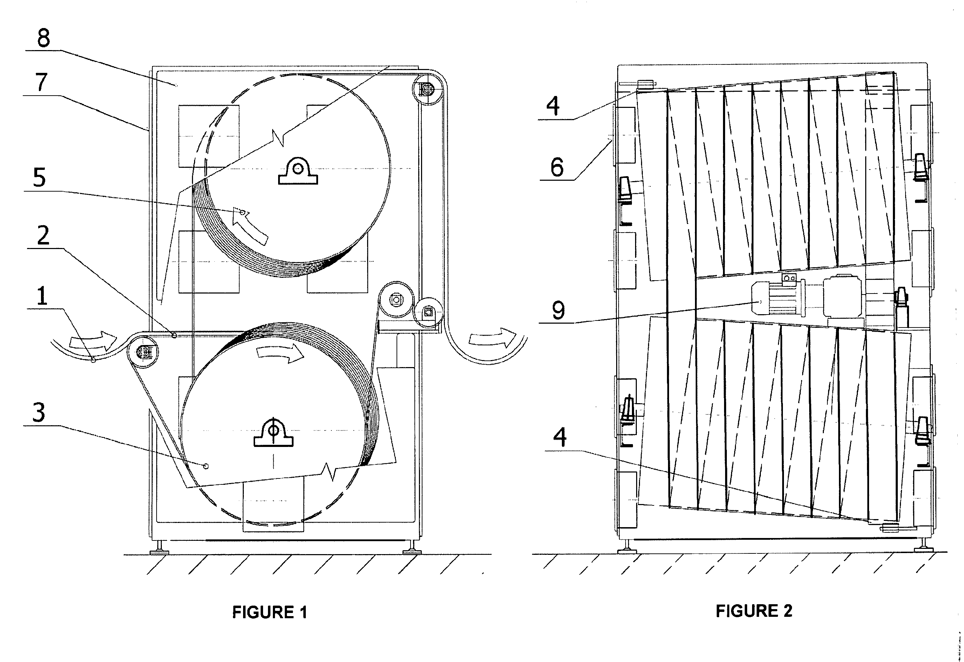

Figures 1 and 2 shows the descript device.

The device for cooling the bands of caoutchouc compound consist of frame 7 at which the cooling drums 3 and 5 are_attached. Arrangements of cooling drums are designed in such a way that their axes of rotation are inclined. The conveyer belt 2 is twisted around the drums 3 and 5 in spiral. The belt is driven by motor 9. The position of conveyer belt 2 on the cooling drums determinate the guiding listels 4 (fixed on the frame 7). Frame 7 together with cooling drums 3 and 5, conveyer belt 2 are closed by the cover 8. The fans which regulate the air are fixed in cover 6. The cover 8 is equipped with input and output openings arranged in one line. That allows the arranging of the device for cooling into the production line.

The conveyer belt 2 is wrapped around the drum periphery 3 and creates the thread wraparound with pitch around the conveyer belt width. Wrapped conveyer belt is shifted in direction of drum axis by the help of guiding listel 4. The threads of conveyer belt together with band of caoutchouc compound are shifted in this way until the end of drum 3 peripheries and after short distance are wrapped on drum 5 periphery. The cooling air can be distributed into the inner space of drums.

### Function of the device for cooling the bands of caoutchouc compounds:

The band of caoutchouc compound 1 with a temperature of around 80° - 100°C is transported from the production device (not shown) to the conveyer belt 2. The band is carried by conveyer belt to the periphery of cooling drum 3. Wrapped conveyer belt is shifted on the surface of cooling drum by guiding listel 4. The thread of conveyer belt together with band of caoutchouc compound are shifted until reaching the end of drum 3 periphery and after short distance are wrapped on drum 5 periphery. The band of caoutchouc compound 1 leaves the periphery of cooling drum with temperature of about 35 - 45°C. It is possible to improve the effectiveness of the device for cooling by blowing the band with cooling air (regulated by fans). Therefore, the number of threads of wrapped conveyer belt and dimensions of device are decreasing.

## Claims

1. The device for cooling the bands of caoutchouc compounds **characterised in that** the cooling drums (3,5) are fixed on frame (7) in such a way that their axis of rotation are inclined in the plane to each other.

2. The device for cooling the bands of caoutchouc compounds according to claim 1, **characterised in that** the conveyer belt (2) driven by motor (9) is wrapped on the cooling drums (3,5) in spiral.

3. The device for cooling the bands of caoutchouc compounds according to claims 1 and 2, **characterised in** the position of the conveyer belt (2) on the cooling drums (3,5) is determined with guiding listel (4) fixed on frame (7).

4. The device for cooling the bands of caoutchouc compounds according to claims 1, 2 a 3, **characterised in that** the frame (7) together with cooling drums (3,5) and conveyer belt (2) are closed with cover (8), in which the elements (6) are fixed to regulate the flow of the cooling utility.

5. The device for cooling the bands of caoutchouc compounds according to claims 1, 2, 3 a 4, **characterised in that** the cover (8) is equipped with opening for input and output of the band, which are arranged in one line.
